# FASCICULE DE BREVET EUROPEEN

(11) **EP 0 350 340 B1**
(45) Date de publication et mention de la délivrance du brevet: **21.07.1993**
(21) Numéro de dépôt: 89400404.3
(22) Date de dépôt: 13.02.1989
(51) Int. Cl.: A47J 37/12

(54) **Perfectionnement aux friteuses**
Frittiergerät
Deep-frying apparatus

(30) Priorité: 07.07.1988 FR 8809426
(43) Date de publication de la demande: 10.01.1990
(73) Titulaire: Société Anonyme de DECOUPAGE et EMBOUTISSAGE NANTAIS dite SADEN, F-44800 Saint-Herblain (FR)
(72) Inventeur: Le Feur, Jacques, F-44240 Suce sur Erdre (FR); Le Feur, Philippe, F-44240 Suce sur Erdre (FR); Abraham, Jean, F-44800 Saint-Herblain (FR)
(74) Mandataire: Phélip, Bruno

(56) Documents cités:
- EP-A- 0 145 511
- EP-A- 0 279 262
- FR-A- 2 086 562
- US-A- 1 623 093
- US-A- 2 108 627

## Description

La présente invention concerne un perfectionnement aux friteuses et, plus particulièrement, un perfectionnement aux friteuses en forme de récipient destiné à être posé sur une source de chaleur, c'est-à-dire aux friteuses habituellement dénommées friteuses classiques.

Ces friteuses classiques sont constituées d'une cuve, ou bassine, et d'un panier égouttoir amovible qui permet la cuisson de denrées alimentaires dans un bain de friture.

Lorsqu'il s'agit de la cuisson de denrées alimentaires comme des frites, par exemple, il est bien connu qu'elles doivent être plongées dans le bain lorsque ce dernier a atteint une température optimale, qui est de l'ordre de 170°C. Dans le cas de cuisson avec les friteuses classiques, c'est-à-dire ne comportant pas de thermostat, l'appréciation de la température de l'huile est toujours délicate ; il est fréquent de tremper les frites dans une huile non encore assez chaude, ce qui leur ôte bien entendu une grande partie des qualités gustatives appréciées pour ce genre de produit, comme l'aspect croustillant par exemple.

Dans le document US-A-2 108 627, la machine automatique pour la préparation de pop corns est constituée d'une cuve de friture dans laquelle est positionné un panier de cuisson. Un organe sensible à la température permet le passage du courant destiné à un moteur électrique, lequel moteur assure le mouvement de descente du panier, lorsque le bain atteint une température optimale. L'organe sensible à la température est lié à un ensemble de moyens de manoeuvre qui se situent en-dehors de la cuve contenant le bain de friture et qui actionnent le panier pour le faire passer de sa position inactive, c'est-à-dire situé au-dessus du bain, à la position active c'est-à-dire plongé dans le bain.

Les moyens de manoeuvre utilisés rendent cette machine encombrante et relativement complexe : en outre, elle nécessite une source énergétique électrique pour son fonctionnement.

La présente invention a pour objet une friteuse classique, très simple de conception et d'utilisation, qui permet la préparation de denrées alimentaires, comme les frites, avec une garantie totale pour ce qui est de leur mise au bain lorsque celui-ci est à température optimale.

La friteuse selon l'invention est du type constituée d'une cuve, d'un panier égouttoir pouvant être maintenu au-dessus du bain de friture, et elle comporte un organe sensible à la température pour déclencher le mouvement de descente du panier lorsque la température du bain est optimale. Cette friteuse est caractérisée par le fait qu'elle comporte un dispositif de déclenchement du mouvement de descente du panier, disposé dans ladite cuve.

Outre l'avantage du bain à température optimale, la friteuse présente également un intérêt nouveau sur le plan de la sécurité.

En effet, pour les friteuses classiques, c'est-à-dire non pourvues d'un thermostat, il peut arriver que la température du bain de friture s'élève au-delà de la température optimale requise pour la cuisson des denrées et parfois jusqu'au point éclair de l'huile ce qui présente des risques considérables d'inflammabilité.

L'avantage de la friteuse selon l'invention, est de déclencher automatiquement la mise au bain des denrées à cuire lorsque la température optimale est atteinte ; cette mise au bain des denrées à cuire provoque sur ce dernier une chute de température relativement importante, de l'ordre de 1/3 de la température optimale et cette température se maintient tant que les denrées baignent dans la friture, écartant ainsi tout risque de surchauffe.

Selon une disposition préférentielle de l'invention, le dispositif de déclenchement du mouvement de descente du panier égouttoir, comporte au moins une butée coopérant avec ledit panier, laquelle butée est escamotable sous l'effet de l'organe sensible à la température.

Toujours selon l'invention, le dispositif de déclenchement du mouvement de descente du panier, comporte des moyens tendant à remettre la butée en position active, lorsque la température du bain s'abaisse à une valeur qui correspond sensiblement aux 2/3 de la température optimale de départ.

Selon un premier mode de réalisation de l'invention, l'organe sensible à la température consiste en un vérin thermostatique disposé au fond de la cuve de la friteuse, dans un tube vertical qui permet un guidage du panier, la tige dudit vérin agissant sur un système à ressort du genre épingle dont les branches d'extrémité formant butée, sont guidées dans des rainures verticales dudit tube de guidage.

Selon un autre mode de réalisation de l'invention, l'organe sensible à la température consiste en une lamelle d'un matériau dit "à mémoire de forme". Selon une première possibilité, ce matériau est un matériau à mémoire simple, associé à une butée réalisée en acier à ressort de façon à contrarier son effet et tendre à le ramener en position active. Selon une seconde possibilité, le matériau est un matériau à mémoire réversible, c'est-à-dire capable de prendre de lui-même selon la température du bain de friture une position active de butée ou une position inactive.

Selon cet autre mode de réalisation, c'est-à-dire comportant un organe sensible du type matériau à mémoire de forme, le dispositif de déclenchement du mouvement de descente comporte, dans un premier cas, une glissière disposée sensiblement verticalement sur la bordure de la cuve (ou bassine), laquelle glissière comporte à sa partie inférieure, dans le bain de friture, l'organe sensible à la température du bain.

Dans ce dernier cas, selon une disposition préférentielle de l'invention, le panier égouttoir comporte des moyens de guidage coopérant avec la glissière verticale disposée sur le bord de la cuve ; ces moyens de guidage sont en forme de galets disposés sur une structure solidaire du panier, s'apparentant à un chariot.

Selon une autre possibilité de l'invention, la friteuse peut comporter une butée solidaire d'une épingle à ressort disposée dans un tube vertical central de guidage du panier, ladite épingle étant munie, entre ses deux branches, d'une lamelle d'un matériau à mémoire simple, l'une de ses branches étant solidaire dudit tube central, l'autre branche étant solidaire de ladite butée guidée dans ledit tube vertical.

Selon une disposition préférentielle de l'invention, dans le cas d'une cuve munie d'un tube central, le panier égouttoir comporte des moyens de guidage sur ledit tube central vertical, constitués d'un tube central vertical également, s'enfilant sur le tube de la cuve.

L'invention sera encore illustrée par la description suivante et les dessins annexés donnés à titre indicatif, et dans lesquels :
- la figure 1 est une élévation schématique, en coupe, d'une friteuse selon un premier mode de réalisation ;
- la figure 2 est une élévation en coupe, d'une friteuse selon la figure 1, avec le panier descendu dans le bain de friture ;
- la figure 3 représente, en coupe, la partie centrale d'une friteuse selon un autre mode de réalisation de l'invention ;
- la figure 4 est une vue de côté partielle du second mode de réalisation de la figure 3, avec une coupe du tube central de guidage, uniquement ;
- la figure 5 est une vue de dessous du dispositif situé dans le tube central de guidage ;
- la figure 6 est une vue agrandie du détail encadré sur la figure 4 ;
- la figure 7 est une vue agrandie du détail encadré sur la figure 3 ;
- la figure 8 illustre, en élévation et en coupe, un autre mode de réalisation d'une friteuse selon l'invention ;
- la figure 9 représente la glissière disposée dans la cuve représentée figure 8, avec, latéralement, une section de cette glissière ;
- la figure 10 représente la glissière, selon la figure 9, en coupe, munie du dispositif de déclenchement du mouvement de descente du panier égouttoir, en position active de butée ;
- la figure 11 représente le dispositif de déclenchement du mouvement de descente du panier égouttoir en position inactive, ledit panier étant descendu dans le bain ;
- la figure 12 représente le chariot de guidage du panier coopérant avec la glissière représentée figure 9.

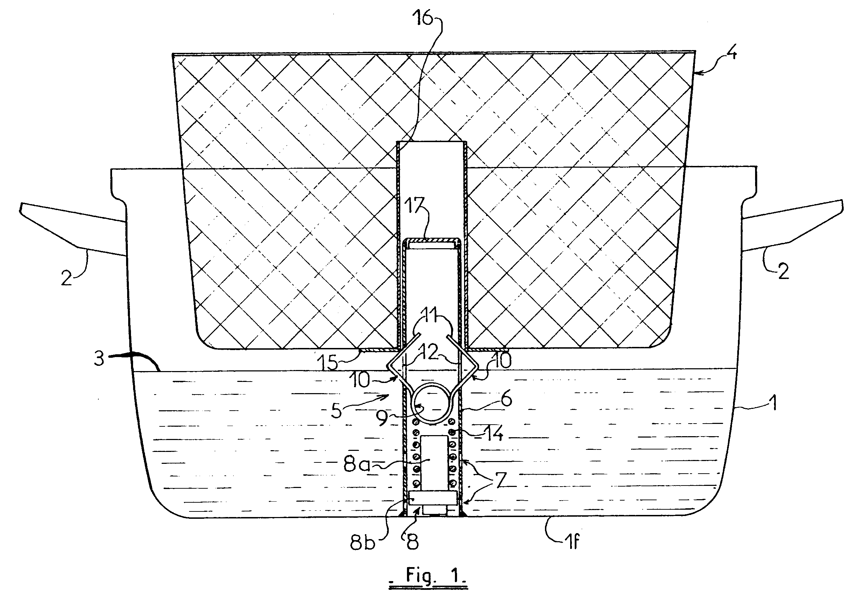

Tel que représenté figure 1, la friteuse est constituée d'une cuve 1, munie de deux poignées 2 diamétralement opposées, proches de la bordure supérieure. Cette cuve, ou bassine 1, est remplie, pour 1/3 de son volume environ, d'huile de friture ou de produit similaire ; on a indiqué le niveau d'huile 3 sur la figure 1.

Un panier égouttoir 4 est également apparent figure 1. Ce panier égouttoir 4 est constitué habituellement d'une armature en fil soutenant un maillage métallique relativement fin.

Le panier égouttoir 4 est centré et maintenu au-dessus du niveau d'huile au moyen du dispositif 5 de déclenchement de son mouvement de descente dans le bain de friture.

Ce dispositif de déclenchement comprend tout d'abord un tube vertical 6 centré à l'intérieur de la cuve 1 et solidaire du fond 1f de cette dernière par tout moyen approprié, du genre soudure par exemple. Ce tube cylindrique 6 comporte des orifices 7 qui permettent une introduction de l'huile de friture à l'intérieur.

Dans ce tube 6 on trouve, en contact avec le fond 1f de la cuve, un organe 8 sensible à la température qui, dans l'exemple de la figure 1, est un vérin du type thermostatique contenant des moyens dilatables du genre cire alimentaire. Au-dessus de cet organe sensible 8 est disposé un système à ressort 9 en forme d'épingle dont les prolongements des branches latérales 10 constituent des butées 11 qui immobilisent le panier 4. Les branches 10 de l'épingle sont pliées en équerre pour former les butées 11 et cette partie en équerre est disposée dans des lumières verticales 12, taillées de façon diamétralement opposées, dans le tube de guidage 6. En position active, les butées 11 sont en contact avec les extrémités supérieures des lumières 12.

On remarque encore figure 1, un ressort hélicoïdal 14, disposé autour du corps 8a du vérin thermostatique 8, entre une collerette 8b de ce dernier et le système à ressort 9 en forme d'épingle ; ce ressort 14 permet de maintenir le vérin thermostatique 8 en appui contre le fond 1f de la cuve 1 et, lorsque la température du bain de friture descend en-dessous de la valeur optimale recherchée pour la cuisson des denrées, ce ressort 14 permet la rétraction du vérin 8. L'épingle 9 reprend d'elle-même sa position de départ.

Les butées 11 sont en contact avec le fond 4f du panier égouttoir 4 et en particulier avec un anneau 15 disposé au centre dudit panier à la partie basse d'un tube vertical de guidage 16 qui s'enfile sur le tube de guidage 6 solidaire du fond 1f de la cuve. Le tube de guidage 16 du panier égouttoir 4 a un diamètre sensiblement supérieur à celui du tube de guidage 6 et leurs hauteurs sont équivalentes.

On remarque encore figure 1, que le tube de guidage 6 comporte, à sa partie supérieure, un chapeau 17 d'obturation pour éviter toute chute accidentelle de denrées alimentaires à l'intérieur dudit tube de guidage pouvant causer des incidents divers de fonctionnement du dispositif de déclenchement du mouvement de descente.

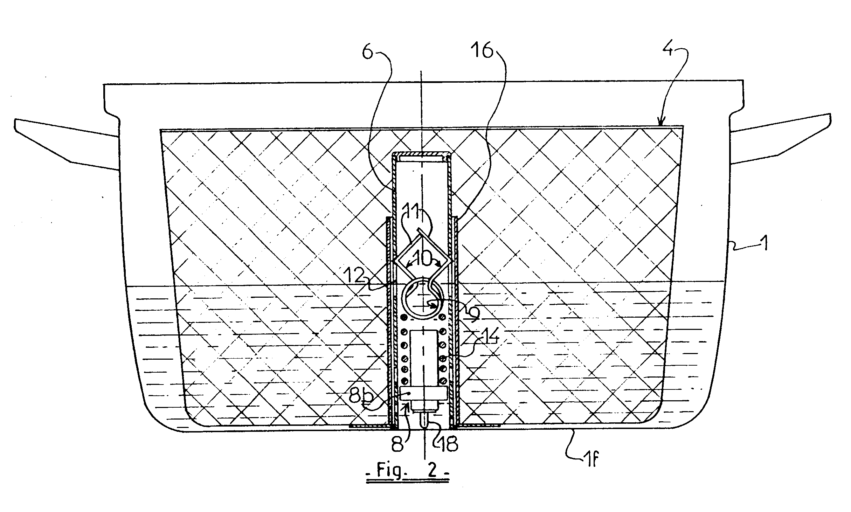

La figure 2 présente la friteuse lorsque la température du bain de friture correspond à la température de cuisson, c'est-à-dire que le panier 4 est immergé dans ledit bain de friture. Le panier égouttoir 4 repose sur le fond 1f de la cuve. On remarque que le vérin thermostatique 8 a déplacé le système à ressort 9 ; la tige 18 du vérin thermostatique 8 est sortie, en appui sur le fond 1f ; la collerette 8_{b} du vérin s'est élevée par rapport audit fond 1f, provoquant, par l'intermédiaire du ressort 14, le déplacement de l'épingle 9 vers le haut et en particulier le déplacement des branches 10 et butées 11 dans les lumières 12 du tube de guidage 6. Les extrémités des butées 11 de l'épingle à ressort 9 sont en contact l'une avec l'autre, stoppant ainsi tout mouvement de ladite épingle 9 dans le tube de guidage 6.

Lorsque la température du bain de friture diminue, suite à l'introduction des denrées dans ledit bain, le vérin thermostatique 8 se rétracte ; il est poussé par le ressort 14 de compensation pour reprendre sa position de départ tel que représenté figure 1. Les branches d'extrémité 10 et butées 11 de l'épingle à ressort 9 tendent à ressortir des lumières 12 du tube de guidage 6, pour reprendre leur position active de verrouillage du panier 4. Ce mouvement est contrarié par le tube 16 solidaire du panier égouttoir 4.

Lorsque les denrées sont suffisamment cuites, le panier peut être remonté manuellement, de façon à sortir les denrées du bain de friture. Dès que la partie inférieure du panier égouttoir 4 et en particulier la partie inférieure du tube de guidage 16 a dégagé les lumières 12, les branches 10 et butées 11 de l'épingle 9 reprennent leur position normale de verrouillage du panier 4, en saillie, de part et d'autre, diamétralement, du tube de guidage 6.

Dans la mesure où les denrées doivent subir un autre bain de friture, le dispositif de déclenchement du mouvement de descente agit automatiquement dès que la température du bain a atteint à nouveau une température optimale de 170° par exemple, s'il s'agit de denrées du genre frites.

Le dispositif de déclenchement du mouvement de descente du panier égouttoir 4 agit donc, lorsqu'il est rempli de denrées à frire, comme un moyen de maintien et de régulation de la température du bain de friture, permettant à ce bain d'atteindre sa température optimale de cuisson mais l'empêchant de s'élever au-delà de cette température de cuisson et d'atteindre des températures dangereuses comme les températures du point éclair qui provoquent immanquablement une inflammation du bain de friture.

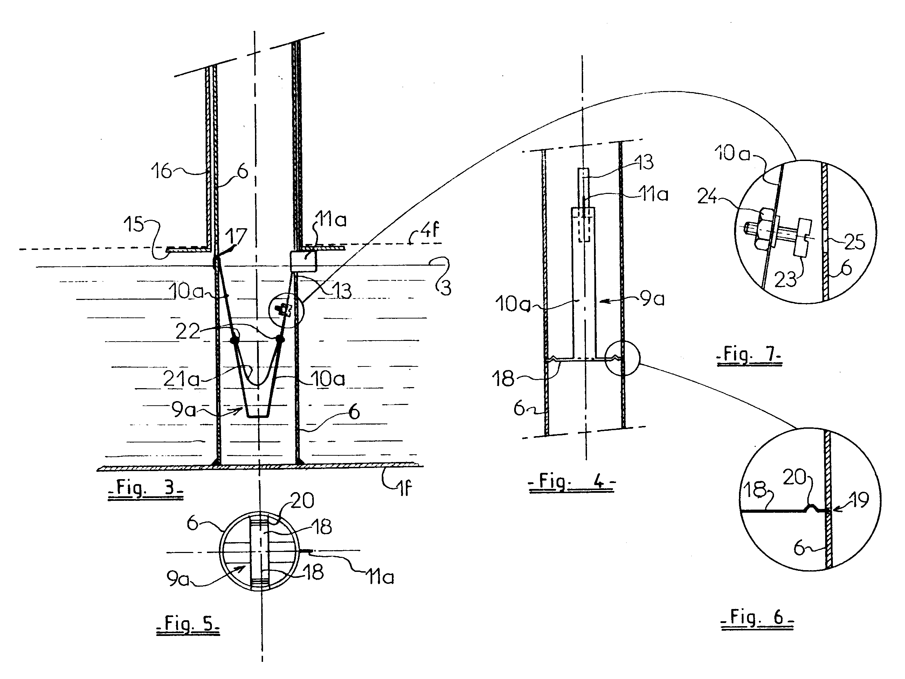

La figure 3 représente, montrée d'une façon partielle, une friteuse selon un second mode de réalisation de l'invention.

Sur cette figure 3, on distingue le fond 1f de la cuve muni d'un tube central de guidage 6 solidaire dudit fond par tout moyen approprié comme de la soudure ou autre. Ce tube de guidage 6 est perforé pour permettre le passage de l'huile de friture, comme dans le cas de la figure 1 ; il s'étend sur une hauteur qui correspond environ aux 3/4 de la hauteur de la cuve.

On a fait figurer également le niveau d'huile 3 contenu dans la cuve de la friteuse et on distingue, représenté très partiellement le panier égouttoir 4 dont on remarque notamment le fond 4f, ainsi que le tube central de guidage 16 et l'anneau 15 disposé à la partie inférieure de ce tube de guidage 16 sous le fond 4f. Cet anneau 15 est en contact direct avec une butée 11a qui s'étend au travers du tube central de guidage 6 dans une lumière verticale 13 taillée sur une génératrice dudit tube 6. Cette butée 11a est solidaire de l'une des extrémités des branches 10a d'une sorte d'épingle 9a en lame de ressort. L'autre branche 10a de cette épingle est fixée à son extrémité supérieure 10a, à la paroi du guide central 6 d'une façon diamétralement opposée à la butée 11a. La fixation de l'extrémité de la branche 10a de l'épingle 9a est effectuée par tout moyen approprié comme par exemple un crochet 17. L'épingle 9a est soutenue à sa partie basse, par deux extensions latérales 18 qui s'enfilent dans des ouvertures diamétralement opposées 19 aménagées dans le tube central de guidage 6, figures 4, 5 et 6. Ces prolongements 18 comportent des pliures 20 qui permettent une immobilisation précise de l'épingle 9a dans le plan médian du tube de guidage 6, lequel plan passe par la lumière 13 où se situe la butée 11a.

Entre les deux branches 10a de l'épingle 9a, on remarque une languette 21a, ou lamelle, réalisée en un matériau dit à mémoire de forme. Cette languette 21a se présente également, entre les deux branches 10a de l'épingle 9a comme une épingle dont les extrémités sont fixées au moyen de rivets 22 auxdites branches 10a.

Ce matériau à mémoire de forme est un alliage du type cuivre-zinc-aluminium dont la structure peut changer sous l'effet des changements de température et/ou des contraintes qui lui sont imposées.

Ces matériaux peuvent être limités à un effet de mémoire simple c'est-à-dire que la propriété d'une pièce est de pouvoir retrouver sa forme initiale par simple réchauffage ; cependant, un abaissement de la température ne permettra pas le retour à la forme de départ.

L'avantage d'un tel matériau réside dans sa grande simplicité d'utilisation et surtout sa parfaite capacité de retrouver sa forme à une température très précise préalablement déterminée, de 170°C par exemple pour une application aux friteuses.

La figure 7 représente un détail de la figure 3. Il s'agit d'une vis de réglage 23 qui permet de modifier la position de la butée 11a par rapport au tube central de guidage 6. Cette vis de réglage 23 coopère avec un écrou 24 serti dans la branche 10a de l'épingle 9a, supportant la butée 11a ; cette vis 23 est disposée entre cette dernière et le rivet 22 qui assure la fixation de la languette 21a du matériau à mémoire de forme. Un orifice 25 percé dans le tube de guidage 6, permet d'avoir accès à la vis 23 au moyen d'un tournevis par exemple, non représenté, pour modifier et régler la position de la butée 11a.

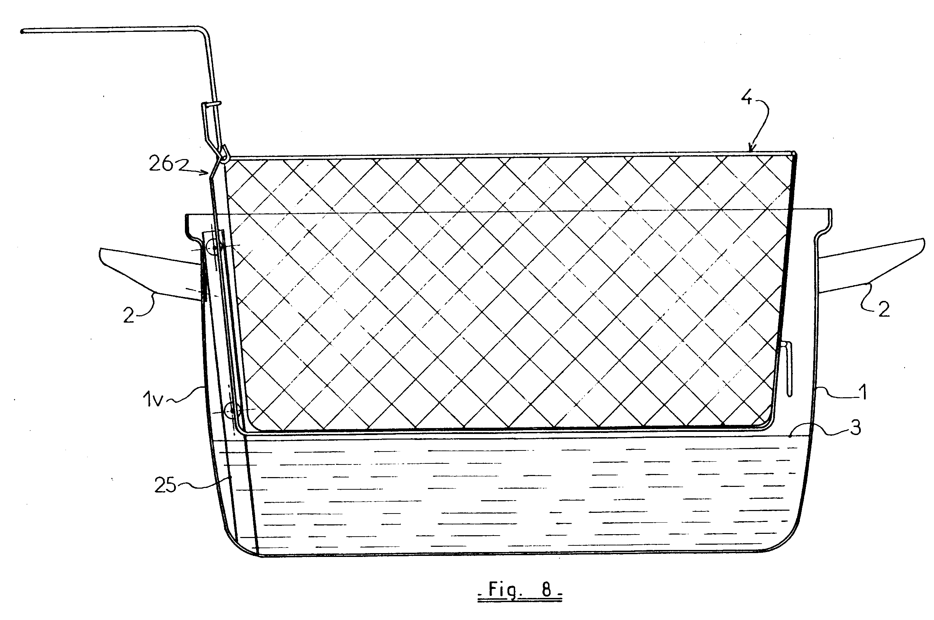

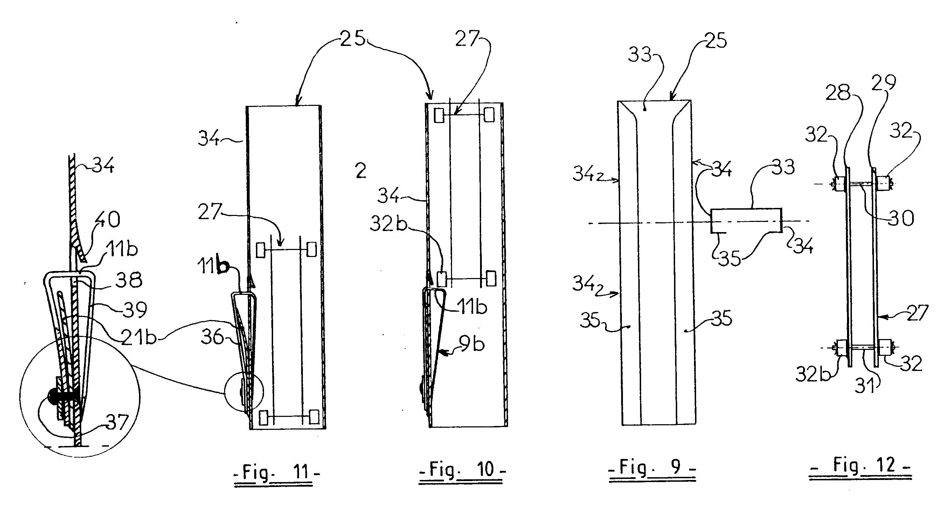

La figure 8 présente un autre mode de réalisation d'une friteuse selon l'invention. On a conservé les mêmes repères pour les parties communes aux différents modes de réalisation. Ainsi cette friteuse est constituée d'une cuve 1 munie de poignées 2 et remplie d'huile jusqu'à un niveau 3. Un panier égouttoir 4 est maintenu au-dessus du niveau d'huile par des moyens de blocage faisant partie du dispositif de déclenchement du mouvement de descente, lesquels moyens apparaîtront plus loin sur les figures 10 et 11.

Le dispositif de déclenchement du mouvement de descente du panier 4 est constitué d'une rampe ou glissière disposée contre la paroi latérale verticale 1v de la cuve 1. On remarque, sur cette figure 8, que la glissière 25 est sensiblement inclinée par rapport à la verticale et, compte-tenu de la forme arrondie de la paroi verticale 1v, un espace subsiste entre cette glissière et ladite paroi verticale. La glissière est solidarisée à la paroi 1v par tout moyen approprié du genre soudure par exemple, à ses deux extrémites. Cette glissière 25 assure le guidage de la structure métallique 26 du panier égouttoir 4. Cette structure métallique comporte, tel que représenté figures 8 et 12, une sorte de chariot 27 constitué de deux tiges verticales 28, 29 munies d'axes transversaux horizontaux 30, 31 disposés respectivement en haut et en bas du panier égouttoir ; ces axes 30, 31 comportent de part et d'autre des tiges 28 et 29, des galets 32 dont le diamètre est adapté pour pouvoir s'insérer entre les parois de la glissière 25.

Cette glissière 25 apparaît figure 9, en vue de face et, sur son côté droit selon une section droite. Cette glissière 25 comporte un dosseret 33 qui s'étend sur toute la hauteur et dont la largeur est sensiblement supérieure à la largeur du chariot 27 ; ce dosseret 33 se prolonge de chaque côté par des bordures 34 disposées en équerre, lesquelles bordures se prolongent par des replis de longueur limitée 35, orientés l'un vers l'autre. Les bordures 34 et 35 ont la même hauteur que le dosseret 33 ; la largeur des bordures 34 est sensiblement supérieure au diamètre des galets 32 et la largeur des replis 35 correspond à l'épaisseur desdits galets 32.

La figure 10 représente le dispositif de déclenchement du mouvement de descente du panier égouttoir dans une configuration qui correspond à un bain de friture froid ; la figure 11 représente le dispositif de déclenchement du mouvement de descente du panier dans une configuration qui correspond à un bain de friture à température optimale de cuisson des denrées.

Le dispositif de déclenchement comprend, en liaison avec la glissière 25, une lamelle 21b d'un matériau à mémoire de forme. Cette lamelle 21b est fixée à l'extérieur de la bordure 34 de la glissière 25, dans sa partie basse, pour être totalement immergée dans le bain de friture.

Un système à ressort 9b, en forme d'épingle retournée sur la lamelle 21b, assure la fonction de butée et de remise en position active de butée, contrariant l'effet de la lamelle 21b du matériau à mémoire de forme. Cette épingle 9b comporte une première branche verticale 36 disposée à l'extérieur de la lamelle 21b et maintenue en même temps que cette lamelle sur la bordure 34 de la glissière 25, au moyen d'un rivet 37 par exemple. Cette branche externe 36 de l'épingle 9b comporte, à sa partie supérieure, un repli 11b à l'équerre qui traverse, par un orifice 38, la bordure 34 de la glissière 25 ; ce repli 11b joue le rôle de butée pour immobiliser le panier égouttoir ; il se prolonge à son tour à l'équerre et dans la partie interne de la glissière 25, par une languette 39 qui s'étend vers le bas contre la bordure 34 de la glissière 25. L'épingle 9b est réalisée en un matériau à ressort qui permet de contrarier le mouvement de la languette 21b en matériau à mémoire de forme.

Le fonctionnement du dispositif est donc le suivant : lorsque le bain de friture est à une température froide, le chariot 27 de l'égouttoir 4, et en particulier son galet inférieur 32b, vient buter sur le repli 11b de l'épingle 9b fixée sur la partie basse de la glissière 25. Lorsque la température du bain de friture a atteint son seuil optimal, la lamelle 21b en matériau à mémoire de forme se courbe et dans son mouvement entraîne la languette 36 externe de l'épingle 9b et dans le même temps escamote la butée 11b constituée par le repli de ladite épingle. Dans cette configuration, figure 11, le chariot 27 et en particulier son galet inférieur 32b est libéré et permet la descente automatique du panier égouttoir dans le bain de friture.

Pour éviter tout risque d'accrochage du chariot dans la glissière 25, on remarque, au-dessus de l'ouverture 38, un léger repli 40 de la bordure 34, vers l'intérieur, et un arrondi important entre le repli 11b de l'épingle 9b et la languette 39.

Lorsque le panier égouttoir est dans le bain de friture, la température de ce dernier va baisser d'un tiers environ ce qui va provoquer, sous l'effet de l'épingle à ressort 9b, un retour de la lamelle 21b contre la bordure 34 et une mise en position active de la butée 11b. La souplesse de l'épingle 9b permet cependant l'escamotage de la languette interne 39 lors du relevage manuel de l'égouttoir 4, ce qui permet le passage du chariot 27 et en particulier de son galet inférieur 32b contre la languette 39 sans risque de blocage ou d'incident.

Dès que le galet inférieur 32b du chariot 27 a franchi la butée 11b, le panier égouttoir peut être maintenu dans cette position grâce à la butée et permettre ainsi une remise à température optimale du bain de friture. Lorsque cette température optimale sera atteinte, la lamelle 21b en matériau à mémoire de forme escamotera à nouveau la butée 11b permettant une descente automatique du panier égouttoir dans le bain de friture à température optimale de cuisson.

On peut également prévoir d'utiliser une lamelle 21b en matériau à mémoire de forme à effet réversible. C'est-à-dire que la lamelle 21b peut prendre deux formes différentes, et aller de l'une à l'autre automatiquement lorsque les températures évoluent. Ainsi par une seule lamelle 21b comportant à son extrémité un repli formant butée, non représentée, on peut obtenir le même effet qu'avec la lamelle à mémoire simple et l'épingle 9b, tel que décrit en relation avec les figures 10 et 11.

L'avantage de l'emploi d'un matériau à mémoire de forme réside dans la fiabilité de sa sensibilité aux variations de température.

Les signes de référence insérés après les caractéristiques techniques mentionnées dans les revendications ont pour seul but de faciliter la compréhension de ces dernières, et n'en limitent aucunement la portée.

## Revendications

1. Friteuse constituée d'une part, d'une cuve (1) et d'un panier égouttoir (4) pouvant être maintenu au-dessus du bain de friture, et munie, d'autre part, d'un organe (8, 21a ou b) sensible à la température et disposé dans ladite cuve, pour déclencher le mouvement de descente dudit panier lorsque la température du bain est optimale, caractérisée en ce qu'elle comporte, associé audit organe, un dispositif de déclenchement du mouvement de descente du panier (4), disposé dans ladite cuve.

2. Friteuse selon la revendication 1, caractérisée en ce que le dispositif de déclenchement du mouvement de descente comporte au moins une butée (11, 11a ou b) coopérant avec le panier égouttoir (4), laquelle butée est escamotable sous l'effet de l'organe (8, 21a ou b) sensible à la température.

3. Friteuse selon la revendication 2, caractérisée en ce que le dispositif de déclenchement du mouvement de descente du panier égouttoir (4) comporte des moyens (9, 9a ou b) tendant a remettre la butée (11, 11a ou b) en position active, lorsque la température du bain s'abaisse à une valeur de l'ordre des 2/3 de la température optimale de cuisson des denrées.

4. Friteuse selon l'une quelconque des revendications 1 à 3, caractérisée en ce que l'organe sensible consiste en un vérin thermostatique (8) disposé au fond de la cuve (1) de la friteuse, dans un tube vertical (6) de guidage du panier égouttoir (4), la tige dudit vérin (8) agissant sur une épingle à ressort (9) dont les branches (10) forment à leurs extrémités, des butées (11) guidées dans des rainures verticales (12) réalisées dans ledit tube de guidage (6), lesquelles butées (11) immobilisent ledit panier (4) au-dessus du niveau (3) du bain de friture.

5. Friteuse selon l'une quelconque des revendications 1 à 3, caractérisée en ce que l'organe sensible à la température consiste en une lamelle (21a ou b) d'un matériau dit à mémoire de forme.

6. Friteuse selon la revendication 5, caractérisée en ce que l'organe sensible consiste en une lamelle (21a ou b) d'un matériau à mémoire simple, agissant sur une butée (11a ou b) solidaire d'une épingle à ressort (9a ou b), qui contrarie l'effet de l'organe sensible de façon à tendre à ramener ladite butée (11a ou b) en position active de blocage du panier égouttoir (4).

7. Friteuse selon la revendication 5, caractérisée en ce que l'organe sensible consiste en une lamelle (21a ou b) d'un matériau à mémoire réversible c'est-à-dire capable de prendre de lui-même, selon la température du bain, une position active de butée ou une position inactive.

8. Friteuse selon la revendication 5, caractérisée en ce qu'elle comporte une glissière (25) disposée sensiblement sur la bordure (1v) de la cuve (1), laquelle glissière (25) comporte à sa partie inférieure, dans le bain de friture, un organe sensible à la température dudit bain, en forme de lamelle (21a) à mémoire de forme.

9. Friteuse selon la revendication 6, caractérisée en ce qu'elle comporte une glissière (25) disposée sensiblement verticalement sur la bordure (1v) de la cuve (1), laquelle glissière (25) comporte à sa partie inférieure dans le bain de friture, une lamelle (21b) en matériau à mémoire de forme à effet simple associée à un système à ressort (9a) en forme d'épingle dont une branche (36) est fixée, en même temps que la lamelle (21b) à l'extérieur de la glissière (25), sur sa bordure (34), laquelle languette (36) est munie, à sa partie supérieure, d'un repli (11b) formant butée qui se prolonge, dans la glissière (25) par une languette (39) qui s'étend vers le bas sur une hauteur correspondant sensiblement à celle de la languette externe (36).

10. Friteuse selon la revendication 9, caractérisée en ce que le panier égouttoir (4) comporte un chariot de guidage (27) coopérant avec la glissière (25) au moyen de galets (32) enserrés dans ladite glissière.

11. Friteuse selon l'une quelconque des revendications 1 à 3, caractérisée en ce qu'elle comporte dans un tube central de guidage (6), une épingle à ressort (9a) munie, à l'extrémité de l'une de ses branches (10),d'une butée (11a), l'autre branche (10a) de ladite épingle étant solidaire de la paroi du tube, les deux branches (10a) de l'épingle étant reliées par une lamelle (21a) en matériau à mémoire de forme à effet simple.

12. Panier égouttoir pour friteuse selon la revendication 11, c'est-à-dire du type comportant un dispositif de déclenchement du mouvement de descente, caractérisé en ce qu'il comporte des moyens de guidage sur le tube central vertical (6) de la friteuse, constitués d'un tube central (16) s'enfilant sur ledit tube de guidage (6).

13. Panier égouttoir pour friteuse selon la revendication 6, c'est-à-dire du type comportant des moyens de déclenchement du mouvement de descente dans le bain de friture, caractérisé en ce qu'il comporte un chariot de guidage muni en haut et en bas de galets (32) coopérant avec une glissière (25) disposée sensiblement verticalement sur la bordure (1v) de la cuve de ladite friteuse.

## Claims

1. Deep-frying apparatus made up of, on the one hand, a tank (1) and basket (4) which can be held above the frying bath, and having, on the other hand, a device (8, 21a or b) which is sensitive to temperature and arranged in said tank, to trigger the downward movement of the said basket when the bath reaches its optimal temperature, characterized in that it comprises a system, associated with the said device, arranged in the said tank to trigger the downward movement of the basket (4).

2. Deep-frying apparatus according to claim 1, characterized in that the device for triggering the downward movement comprises at least one end stop (11, 11a or b) which works in conjunction with the basket (4), said end stop being retractable through the action of the temperature-sensitive device (8, 21a or b).

3. Deep-frying apparatus according to claim 2, characterized in that the device for triggering the downward movement of the basket (4) comprises means (9, 9a or b) tending to return the end stop (11, 11a or b) to its active position when the temperature of the bath falls to a value around two-thirds the optimum cooking temperature of the foodstuff.

4. Deep-frying apparatus according to any one of claims 1 to 3, characterized in that the sensitive device comprises a thermostatically-controlled jack (8) arranged at the bottom of the tank (1) of the deep-frying apparatus, in a vertical guide tube (6) of the basket (4), the rod of the said jack (8) acting on a spring clip (9) whose branches (10) form at their ends, end stops (11) guided in vertical slots (12) made in the said guide tube (6), said end stops (11) immobilizing the said basket (4) above the surface (3) of the frying bath.

5. Deep-frying apparatus according to any one of claims 1 to 3, characterized in that the temperature-sensitive device comprises a strip (21a or b) made from so-called form-memory material.

6. Deep-frying apparatus according to claim 5, characterized in that the sensitive device comprises a strip (21a or b) of a single form-memory material, acting on an end-stop (11a or b) integral with a spring clip (9a or b), which acts against the force of the sensitive device such that it tends to return the said end stop (11a or b) to the active blocking position of the basket (4).

7. Deep-frying apparatus according to claim 5, characterized in that the sensitive device comprises a strip (21a or b) of a so-called reversible-memory material i.e. one capable of assuming by itself an active stop position or an inactive position depending on the temperature of the bath.

8. Deep-frying apparatus according to claim 5, characterized in that it comprises a slide (25) arranged substantially on the edge (1v) of the tank (1), said slide (25) comprising at its lower section, in the frying bath, a device in the form of a form-memory strip (21a) sensitive to the temperature of the said bath.

9. Deep-frying apparatus according to claim 6, characterized in that it comprises a slide (25) arranged substantially vertically on the edge (1v) of the tank (1), said slide (25) comprising at its lower section, in the frying bath, a strip (21b) made of a single-action form-memory material associated with a spring system (9a) in the form of a clip of which one branch (36) is fixed, along with the strip (21b), to the outside of the slide (25), on its edge (34), said strip (36) having, on its upper section, a fold (11b) forming an end stop which is prolonged, in the slide (25) by a strip (39) which extends downwardly over a height substantially corresponding to that of the outer strip (36).

10. Deep-frying apparatus according to claim 9, characterized in that the basket (4) comprises a guide trolley (27) which works in conjunction with the slide (25) by means of rollers (32) inserted into the said slide.

11. Deep-frying apparatus according to any one of claims 1 to 3, characterized in that it comprises in a central guide tube (6), a spring clip (9a) having, at the end of one of its branches (10), an end stop (11a), the other branch (10a) of said clip being integral with the wall of the tube, the two branches (10a) of the clip being connected by a strip (21a) made from a single-action form-memory material.

12. Basket for deep-frying apparatus according to claim 11, i.e. of the type comprising a device for triggering downward movement, characterized in that it comprises guide means on the vertical central tube (6) of the deep-frying apparatus, made up of a central tube (16) which slips over the said guide tube (6).

13. Basket for deep-frying apparatus according to claim 6, i.e. of the type comprising means for triggering downward movement into the frying bath, characterized in that it comprises a guide trolley having rollers (32) at the top and bottom which work in conjunction with a slide (25) arranged substantially vertically on the edge (1v) of the tank of the said deep-frying apparatus.

## Patentansprüche

1. Frittiergerät, das einerseits einen Behälter (1) und einen Abtropfkorb (4), der oberhalb des Frittierbades gehalten werden kann, aufweist und andererseits mit einem Organ (8, 21a oder b) ausgerüstet ist, das temperaturempfindlich und in dem Behälter angeordnet ist, um die Absenkbewegung des Korbes auszulösen, wenn die Badtemperatur optimal ist, dadurch gekennzeichnet, daß das Gerät eine mit dem genannten Organ verbundene Auslöseeinrichtung für die Absenkbewegung des in dem Behälter (1) angeordneten Korbes (4) umfaßt.

2. Frittiergerät nach Anspruch 1, dadurch gekennzeichnet, daß die Auslöseeinrichtung für die Absenkbewegung wenigstens einen Anschlag (11, 11a oder b) umfaßt, der mit dem Abtropfkorb (4) zusammenwirkt, und daß der Anschlag unter der Wirkung des temperaturempfindlichen Organs (8, 21a oder b) einziehbar ist.

3. Frittiergerät nach Anspruch 2, dadurch gekennzeichnet, daß die Auslöseeinrichtung für die Absenkbewegung des Abtropfkorbes (4) ein Mittel (9, 9a oder b) umfaßt, das dazu neigt, den Anschlag (11, 11a oder b) in eine aktive Position zu bringen, wenn sich die Badtemperatur auf einen Wert in der Größenordnung von 2/3 der optimalen Kochtemperatur von Nahrungsmitteln absenkt.

4. Frittiergerät nach einem der Ansprüche 1 bis 3, dadurch gekennzeichnet, daß das temperaturempfindliche Organ aus einem thermostatischen Zylinder (8) besteht, der am Boden des Frittierbehälters (1) in einem vertikalen Führungsrohr (6) für den Abtropfkorb (4) angeordnet ist, daß die Stange des Zylinders (8) auf eine nadelförmige Feder (9) einwirkt, deren Arme (10) an ihren Enden Anschläge (11) bilden, die in vertikalen, in dem vertikalen Führungsrohr vorgesehenen Schlitzen (12) geführt sind, und daß die Anschläge (11) den Korb (4) oberhalb des Niveaus (3) des Frittierbades festsetzen.

5. Frittierbad nach einem der Ansprüche 1 bis 3, dadurch gekennzeichnet, daß das temperaturempfindliche Organ aus einer Lamelle (21a oder b) aus einem Material mit Formgedächtnis besteht.

6. Frittiergerät nach Anspruch 5, dadurch gekennzeichnet, daß das temperaturempfindliche Organ aus einer Lamelle (21a oder b) aus einem Material mit einfachem Formgedächtnis besteht, die auf einen Anschlag (11a oder b) wirkt, der an der nadelförmigen Feder (9a oder b) starr angeordnet ist, die der Wirkung des temperaturempfindlichen Organs derart entgegenwirkt, daß der Anschlag (11a oder b) in eine Position des aktiven Blockierens des Abtropfkorbes (4) zurückgebracht wird.

7. Frittiergerät nach Anspruch 5, dadurch gekennzeichnet, daß das temperaturempfindliche Organ aus einer Lamelle (21a oder b) aus einem Material mit umkehrbarem Gedächtnis besteht, d.h. fähig ist, gemäß der Badtemperatur selbst eine aktive oder inaktive Anschlagstellung einzunehmen.

8. Frittiergerät nach Anspruch 5, dadurch gekennzeichnet, daß es eine Gleitschiene (25) umfaßt, die im wesentlichen am Rand (1v) des Behälters (1) befestigt ist, und daß die Gleitschiene (25) an ihrem unteren, im Frittierbad befindlichen Abschnitt ein für die Temperatur dieses Bades empfindliches Organ in Form einer Lamelle (21a) mit Formgedächtnis aufweist.

9. Frittiergerät nach Anspruch 6, dadurch gekennzeichnet, daß es eine Gleitschiene (25) umfaßt, die im wesentlichen vertikal am Rand (1v) des Behälters (1) befestigt ist, daß die Gleitschiene (25) an ihrem unteren, in dem Frittierbad befindlichen Abschnitt eine Lamelle (21b) aus einem Material mit einfachem Formgedächtniseffekt aufweist, daß die Lamelle mit einem nadelförmigen Federsystem (9a) verbunden ist, dessen einer Arm (36) gleichzeitig mit der Lamelle (21b) außen an der Gleitschiene (25) an ihrem Rand (34) fixiert ist, und daß der zungenförmige Arm (36) in seinem Oberbereich mit einem einen Anschlag bildenden Faltteil (11b) ausgerüstet ist, der sich in einen in der Schiene (25) verlaufenden Armteil (39) verlängert, der sich nach unten entlang einer Höhe erstreckt, die im wesentlichen derjenigen des äußeren länglichen Armes (36) entspricht.

10. Frittiergerät nach Anspruch 9, dadurch gekennzeichnet, daß der Abtropfkorb (4) einen Führungswagen (27) umfaßt, der mit der Schiene (25) mittels Rollen (32), die innerhalb der Schiene gehalten sind, zusammenwirkt.

11. Frittiergerät nach einem der Ansprüche 1 bis 3, dadurch gekennzeichnet, daß es in einem zentralen Führungsrohr (6) eine nadelförmige Feder (9a) umfaßt, die am Ende des einen ihrer Arme (10) mit einem Anschlag (11a) versehen ist und deren anderer Arm (10a) mit der Wand des Rohres fest verbunden ist, und daß die beiden Arme (10, 10a) der Feder durch eine Lamelle (21a) aus einem Material mit einfachem Formgedächtniseffekt miteinander verbunden sind.

12. Abtropfkorb für ein Frittiergerät nach Anspruch 11, d.h. des Typs, der eine Auslöseeinrichtung für die Absenkbewegung umfaßt, dadurch gekennzeichnet, daß der Korb Mittel zum Führen auf dem zentralen vertikalen Rohr (6) des Frittiergerätes umfaßt, wobei die Mittel durch ein zentrales Rohr (16) gebildet sind, das auf dem genannten Führungsrohr (6) gleitet.

13. Abtropfkorb für ein Frittiergerät nach Anspruch 6, d.h. des Typs, der Auslösemittel zum Absenkbewegen in das Frittierbad umfaßt, dadurch gekennzeichnet, daß der Korb einen Führungswagen (27) aufweist, der oben und unten mit Rollen (32) ausgerüstet ist, die mit einer Schiene (25) zusammenwirken, die im wesentlichen vertikal am Rand (1v) des Behälters des Frittiergerätes angeordnet ist.
